# EUROPEAN PATENT SPECIFICATION

(11) **EP 3 117 498 B1**
(45) Date of publication and mention of the grant of the patent: **28.03.2018**
(21) Application number: 15714669.7
(22) Date of filing: 02.02.2015
(51) Int. Cl.: H02J 3/14

(54) **MODULATING CIRCUIT BREAKING PHASE-METER**
MODULATIONSSCHALTUNG FÜR EIN PHASENUNTERBRECHER
CIRCUIT DE MODULATION POUR UN INTERUPTEUR DE PHASE

(30) Priority: 12.03.2014 IT TO20140194
(43) Date of publication of application: 18.01.2017
(73) Proprietor: Kite Gen Research S.R.L., 10099 San Mauro Torinese (TO) (IT)
(72) Inventor: IPPOLITO, Massimo, I-10099 San Mauro Torinesse (TO) (IT)
(74) Representative: Garavelli, Paolo
(86) International application number: PCT/IT2015/000019
(87) International publication number: WO 2015/136559

(56) References cited:
- EP-A2- 1 981 146
- WO-A1-01/01542

## Description

The present invention refers to a modulating circuit breaking phase-meter.

In particular, the invention refers to a device for regulating the absorption of the electric load of a network of users depending on optimization criteria for energy distribution in order to comply with one of the priorities at different operating warranty levels.

Circuits are known in the art to provide indications about mains conditions, such as a snapshot of the opening or closing condition of each circuit breaker or for checking switching means in an energy dispensing mains.

Electronic devices for measuring electric energy are also known, and they sample the electric energy with high time resolution to obtain instantaneous current and voltage values, in addition to accumulating the amount of energy, and transmit them in the network at regular time intervals ("time-driven" method). In this way, a certain volume of data is exchanged among the above devices and a central processor placed in the network itself.

Devices are also known, which measure the phasors ("Phasor Measurement Unit") and which operate in real time by sending the digitized values of energy vectors.

Patent IT1308762 discloses a method for managing the consumption of electric power by a system of users comprising a set of smart users equipped with control systems, such set of users being operatively connected to an energy supplying mains. Means for measuring power transmit information about power consumption to such control systems. Both information about power consumption, and information about smart user status are processed to determine a priority, in order to establish the right of the associated smart user to consume power packages usable from the energy supplying mains.

Patent IT1308762 however does not disclose the way in which the electric load of a specific electric user is interrupted or modulated, and moreover does not mention the necessary solutions to guarantee a simple and immediate connection, which can be adapted to any type of electric user.

Object of the present invention is solving the above prior art problems by providing a modulating circuit breaking phase-meter which can be connected to an electric apparatus, which is capable of avoiding to exceed a predetermined threshold of electric power globally absorbed by a network of users regulating the consumption.

Another object is providing a device for controlling and regulating electric power, of an immediate application and which can be easily connected to the supply outlet of an electric apparatus.

The above and other objects and advantages of the invention, as will appear from the following description, are obtained with a modulating circuit breaking phase-meter as claimed in claim 1. Preferred embodiments and non-trivial variations of the present invention are the subject matter of the dependent claims.

It is intended that the enclosed claims are an integral part of the present description.

It will be immediately obvious that numerous variations and modifications can be made to the described apparatus and method (for example related to shape, sizes, arrangements, various colors and parts with equivalent functionality) without departing from the scope of the invention as appears from the enclosed claims.

The present invention will be better described by some preferred embodiments, provided as a nonlimiting example, with reference to the enclosed drawings, in which:
- Figure 1 shows a block diagram of an electric mains with a set of users subjected to control and regulation of electric power according to the present invention;
- Figure 2 shows a graph of the electric power phase absorbed by a user according to the present invention.

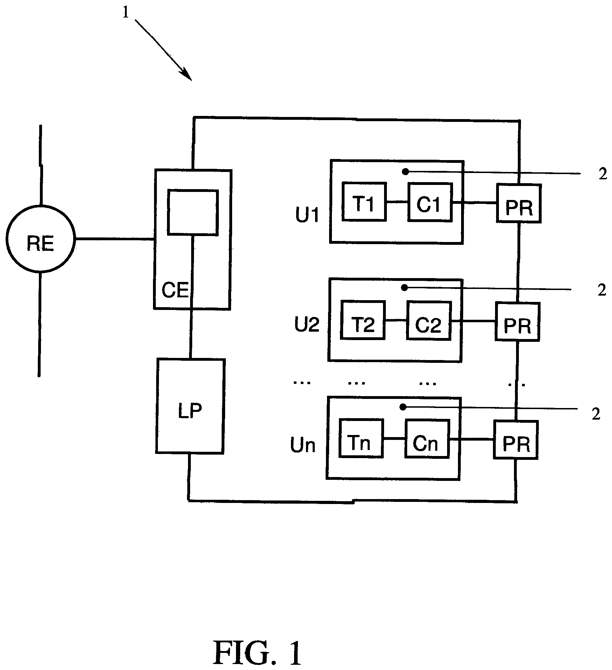

With reference to Figure 1, it is possible to note that an electric energy dispensing system 1 operates in a household or industrial environment or in a plant for producing renewable energy for taking electric energy from an external dispensing mains RE, through an energy meter CE and with a power limiter LP.

The electric energy dispensing system 1 comprises a certain number n of electric outlets PR adapted to supply as many users U1, U2,..., A.

Advantageously, the modulating circuit breaking phase-meter 2 according to the present invention comprises at least one precision clock C1, C2, ..., Cn, locked to at least one electric current phase of the electric energy dispensing system 1 and at least one power modulator T1, T2, ..., Tn, cooperating with the precision clock C1, C2, ..., Cn, at least for limiting the electric load supplied to the respective user U1, U2,...,A.

Preferably, at least one user U1, U2,...,A can be connected to a respective outlet PR by interposing at least one modulating circuit breaking phase-meter 2 according to the present invention adapted to allow the transmission of power modulated through the electric mains.

Such power modulator T1, T2, ..., Tn can comprise at least one semiconductor, specifically designed to control alternate current loads such as, for example, a TRIAC ("Triode For Alternating Current") device.

In the present invention, the power modulator T1, T2, ..., Tn cooperates with the precision clock C1, C2, ..., Cn, to be able to perform the optimum sharing of consumptions, limiting the current.

The modulating circuit breaking phase-meter 2 further comprises at least one controller (not shown) adapted to send to at least one user U1, U2,..., A at least one value of available power, at certain time intervals and next to a relevant variation of the absorption of electric power.

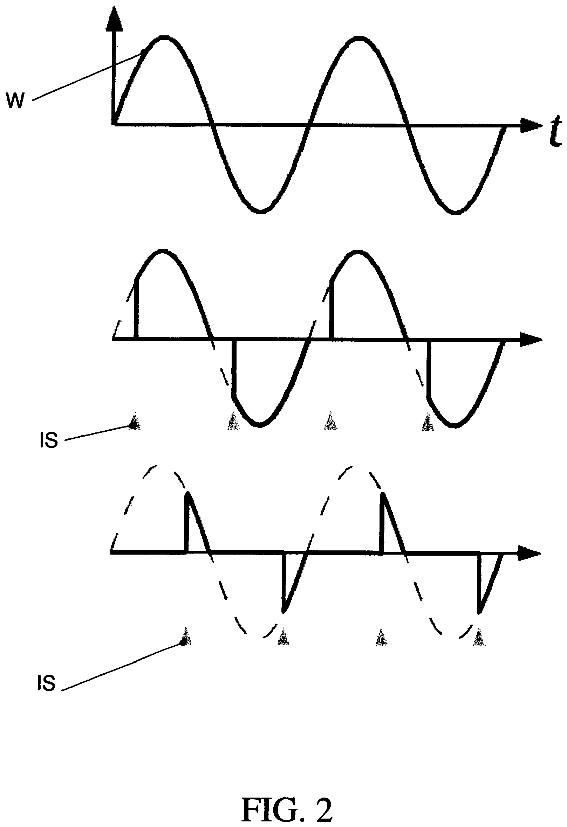

With reference to Figure 2, it is possible to note that at least limiting the electric current is performed by sending at least one triggering signal IS with an adequate delay with respect to the beginning of every half-wave W, variable from zero to the half-period length, interrupting or modulating the electric load depending on the phase angle of the current sinusoid present on the poles of such user U1, U2,..., A.

The modulating circuit breaking phase-meter 2 therefore operates without the need of communicating with the control unit of the electric line, regulating the absorption in order to adapt the electric load to the production.

The power modulator T1, T2,..., Tn can further comprise at least one phase-meter adapted to measure at least one phase angle of a derivative or proportional function of the electric current

The modulating circuit breaking phase-meter 2 according to the present invention is, advantageously, a device which can be directly applied to the electric outlet PR of the electric energy distribution system 1 connected to the user U1, U2,..., A.

The modulating circuit breaking phase-meter 2 allows intervening on such user depending on the locally detected electric mains load and on the periodic measures of the electric current phase.

The modulating circuit breaking phase-meter 2 is able to verify whether there is a phase delay in the electric energy dispensing system 1. In case of overloaded mains, the operation of the apparatuses is managed so that they absorb less energy, giving priority to more important processes and slowing down or ending the others; while if there is no delay, and therefore there is a phase advance, the abundance of energy is exploited to perform the energetically more consuming processes.

The modulating circuit breaking phase-meter 2 applied to a user can operate discontinuously (such as, for example, water heaters, heat pumps, household appliances, battery recharge, industrial processes which can be made discrete) takes care of continuously measure the electric current phase in the outlet PR which supplies the user. Depending on phase variations with respect to the service value of 50 Hz, the device determines where the mains, locally to the user outlet, has to face an excess or a lack of absorbed power.

The modulating circuit breaking phase-meter 2 can perform the load disconnection or supply, possibly using a set of rules which can be customized by the user or programmed for performing the absorption in time ranges wherein energy costs less.

In order to do so, the modulating circuit breaking phase-meter 2 according to the present invention can be equipped with a control console comprising, for example, at least one screen equipped with keyboard (not shown) easily accessible after the connection of the device 2 to the supply outlet connected to the electric apparatus.

The modulating circuit breaking phase-meter 2 applied to an adequate number of loads sensibly provides a contribution to the mains stability reducing the entity of the demand peaks and reducing the risk of a black out without generating user disservices, as can happen for example if the "demand side" regulation occurs with programmed user disconnection plans or by involving customers which can be interrupted.

## Claims

1. Modulating circuit breaking phase-meter (2) adapted to regulate and transmit electric power from an electric energy dispensing system (1) to at least one user (U1, U2,..., A), **characterized in that** it comprises at least one precision clock (C1, C2,..., Cn) locked to at least one electric current phase of said electric energy dispensing system (1) and at least one power modulator (T1, T2,..., Tn) cooperating with said precision clock (C1, C2,..., Cn) at least for limiting an electric load supplied to said user (U1, U2,..., A) .

2. Modulating circuit breaking phase-meter (2) according to the previous claim, **characterized in that** said power modulator (T1, T2,..., Tn) comprises at least one semiconductor adapted to control alternate current loads.

3. Modulating circuit breaking phase-meter (2) according to claim 1 or 2, **characterized in that** said power modulator (T1, T2,..., Tn) comprises at least one TRIAC device.

4. Modulating circuit breaking phase-meter (2) according to claim 1, **characterized in that** said power modulator (T1, T2,..., Tn) comprises at least one phase-meter adapted to measure at least one phase angle of a derivative or proportional function of said electric current.

5. Modulating circuit breaking phase-meter (2) according to claim 1, **characterized in that** it comprises at least one controller adapted to send to at least one of said users (U1, U2,..., A) at least one value of an available electric power, at certain time intervals and next to a relevant variation of the electric power absorption.

6. Modulating circuit breaking phase-meter (2) according to any one of the previous claims, **characterized in that** at least said electric current limiting is performed by sending at least one triggering signal (IS) with a suitable delay with respect to the beginning of every half-wave (W), variable from zero to the half-period length, interrupting or modulating said electric load depending on said phase angle of the sinusoid of said electric current present on the poles of said user (U1, U2,..., A).

7. Modulating circuit breaking phase-meter (2) according to any one of the previous claims, **characterized in that** it is directly applied to at least one electric outlet (PR) of said electric energy dispensing system (1).

8. Modulating circuit breaking phase-meter (2) according to any one of the previous claims, **characterized in that** it comprises at least one control console.

## Patentansprüche

1. Phasenmesser Auftrenner Modulator (2), der dazu dient, elektrische Leistung zu regulieren und von einem Verteilungssystem elektrischer Energie (1) an mindestens einen Verbraucher (U1, U2,..., Un) zu übertragen, der **dadurch gekennzeichnet** ist, mindestens eine Präzisionsuhr (C1, C2,..., Cn) zu enthalten, die an mindestens einer Stromphase des genannten Verteilungssystems elektrischer Energie (1) befestigt ist, und mindestens einen Leistungsmodulator (T1, T2,..., Tn), der mit der genannten Präzisionsuhr (C1, C2,..., Cn) zusammenarbeitet, um mindestens eine Stromlast zu begrenzen, mit der der genannte Verbraucher (U1, U2,..., Un) versorgt wird.

2. Phasenmesser Auftrenner Modulator (2) gemäß dem vorhergehenden Patentanspruch, der **dadurch gekennzeichnet ist, dass** der genannte Leistungsmodulator (T1, T2,..., Tn) mindestens einen Halbleiter enthält, der dazu dient, die Wechselstromlasten zu kontrollieren.

3. Phasenmesser Auftrenner Modulator (2) gemäß Patentanspruch 1 oder 2, der **dadurch gekennzeichnet ist, dass** der genannte Leistungsmodulator (T1, T2,..., Tn) mindestens eine TRIAC-Vorrichtung enthält.

4. Phasenmesser Auftrenner Modulator (2) gemäß Patentanspruch 1, der **dadurch gekennzeichnet ist, dass** der genannte Leistungsmodulator (T1, T2,..., Tn) mindestens einen Phasenmesser enthält, der dazu dient, mindestens einen Phasenwinkel einer derivativen proportionalen Funktion des genannten Stroms zu messen.

5. Phasenmesser Auftrenner Modulator (2) gemäß Patentanspruch 1, der **dadurch gekennzeichnet ist, dass** er mindestens eine Kontrollvorrichtung enthält, die dazu dient, zu bestimmten Zeitintervallen und entsprechend einer bedeutenden Änderung der Stromaufnahme mindestens einen Wert einer verfügbaren elektrischen Leistung an mindestens einen genannten Verbraucher (U1, U2, ..., Un) zu senden.

6. Phasenmesser Auftrenner Modulator (2) gemäß einem der vorhergehenden Patentansprüche, der **dadurch gekennzeichnet ist, dass** mindestens die genannte Strombegrenzung durch Senden von mindestens einem Auslöser (IS) mit entsprechender Verzögerung gegenüber dem Anfang jeder Halbwelle (W) ausgeführt wird, der von null bis zur Dauer der Halbperiode variiert, und die genannte Stromlast aufgrund des genannten Phasenwinkels der Sinuskurve des genannten Stroms unterbricht und moduliert, der an den Polen des genannten Verbrauchers (U1, U2,..., Un) vorhanden ist.

7. Phasenmesser Auftrenner Modulator (2) gemäß einem der vorhergehenden Patentansprüche, der **dadurch gekennzeichnet ist, dass** er direkt auf mindestens eine Steckdose (PR) des genannten Verteilungssystems elektrischer Energie (1) angewendet wird.

8. Phasenmesser Auftrenner Modulator (2) gemäß einem der vorhergehenden Patentansprüche, der **dadurch gekennzeichnet ist, dass** er mindestens ein Steuerpult enthält.

## Revendications

1. Phasemètre disjoncteur modulateur (2) apte à régler et transmettre la puissance électrique à partir d'un système de distribution de l'énergie électrique (1) vers au moins une entrée utilisateur (U1, U2,..., Un), **caractérisé en ce qu'**il comprend au moins une horloge de précision (C1, C2,..., Cn) accrochée au moins à une phase de courant électrique du système de distribution de l'énergie électrique (1) et au moins un modulateur de puissance (T1, T2,..., Tn) qui coopère avec l'horloge de précision (C1, C2,..., Cn) pour limiter une charge électrique alimentée par l'entrée utilisateur (U1, U2,..., Un).

2. Phasemètre disjoncteur modulateur (2), selon la revendication précédente, **caractérisé en ce que** le modulateur de puissance (T1, T2,..., Tn) comprend au moins un semi-conducteur apte à contrôler des charges en courant alterné.

3. Phasemètre disjoncteur modulateur (2), selon la revendication 1 ou 2, **caractérisé en ce que** le modulateur de puissance (T1, T2,..., Tn) comprend au moins un dispositif TRIAC.

4. Phasemètre disjoncteur modulateur (2), selon la revendication 1, **caractérisé en ce que** le modulateur de puissance (T1, T2,..., Tn) comprend au moins un phasemètre apte à mesurer au moins un angle de phase d'une fonction dérivée ou proportionnelle du courant électrique.

5. Phasemètre disjoncteur modulateur (2), selon la revendication 1, **caractérisé en ce qu'**il comprend au moins un contrôleur apte à envoyer au moins à une entrée utilisateur (U1, U2,..., Un) une valeur de puissance électrique disponible, à intervalles de temps déterminés et en cas de variation importante de la consommation de puissance électrique.

6. Phasemètre disjoncteur modulateur (2) selon l'une des revendications précédentes, **caractérisé en ce que** la limitation de courant électrique est effectuée en envoyant un signal de déclenchement (IS) avec un retard approprié par rapport au début de chaque demi-onde (W), variable de zéro à la durée de la demi-période, en interrompant ou en modulant la charge électrique en fonction de l'angle de phase de la sinusoïde du courant électrique présent sur les pôles de l'entrée utilisateur (U1, U2,..., Un).

7. Phasemètre disjoncteur modulateur (2) selon l'une des revendications précédentes, **caractérisé en ce qu'**il est appliqué directement sur au moins une prise électrique (PR) du système de distribution de l'énergie électrique (1).

8. Phasemètre disjoncteur modulateur (2) selon l'une des revendications précédentes, **caractérisé en ce qu'**il comprend au moins une console de commande.
